# FASCICULE DE BREVET EUROPEEN

(11) **EP 3 116 792 B1**
(45) Date de publication et mention de la délivrance du brevet: **02.08.2017**
(21) Numéro de dépôt: 15725694.2
(22) Date de dépôt: 13.03.2015
(51) Int. Cl.: B65B 39/00, B65B 31/00, B65B 57/14, B65B 3/06, B65B 3/30, G01F 11/28, G01F 13/00

(54) **PROCEDE ET DISPOSITIF DE CONDITIONNEMENT DE BOISSON**
VERFAHREN UND VORRICHTUNG ZUR VERPACKUNG EINES GETRÄNKS
METHOD AND APPARATUS FOR BEVERAGE PACKAGING

(30) Priorité: 14.03.2014 FR 1400615
(43) Date de publication de la demande: 18.01.2017
(73) Titulaire: 1/4 Vin, 83210 Sollies-Pont (FR)
(72) Inventeur: CARVIN, Pascal, 83210 Solliès-Pont (FR); MURA, Christian, 83330 Le Plan Du Castellet (FR)
(74) Mandataire: Marchand, André
(86) Numéro de dépôt international: PCT/FR2015/000061
(87) Numéro de publication internationale: WO 2015/136166

(56) Documents cités:
- EP-A1- 1 533 597
- WO-A1-2012/154292
- US-A- 5 405 443

## Description

### DOMAINE TECHNIQUE

La présente invention est relative à un procédé de conditionnement de boisson dans des conteneurs et à un dispositif de conditionnement de boisson dans des conteneurs permettant la mise en oeuvre de ce procédé.

L'invention est notamment relative au conditionnement d'une boisson susceptible de se dégrader au contact de l'air, en particulier une boisson à base de vin, dans des verres en matière plastique par exemple, sous atmosphère protectrice (inerte).

### ETAT DE LA TECHNIQUE

Le conditionnement du vin dans un verre à boire fermé par un opercule, sous atmosphère gazeuse inerte, est notamment décrit dans les brevets et demandes de brevet FR2735003, FR2802177 et US2010/0092623, FR2887524 et US8161715, et WO2010/106239.

L'invention s'applique en particulier au conditionnement de vin dans des verres dans chacun desquels on introduit un gaz inerte de façon à obtenir des verres remplis et scellés dont l'espace de tête est essentiellement rempli de ce gaz inerte.

Pour conditionner du vin entreposé dans un réservoir tel qu'une cuve de soutirage, dans un conteneur de faible capacité tel qu'un verre à boire, il est nécessaire de transférer le vin du réservoir jusqu'au conteneur, par un circuit de transport de vin relié au réservoir.

Bien que le transfert du vin puisse résulter d'une mise sous pression du réservoir de stockage du vin, ce transfert est généralement opéré par une pompe faisant partie du circuit de transport de vin.

Ce circuit de transport comporte généralement un organe de sectionnement tel qu'une vanne, à commande pneumatique par exemple, parfois dénommée « bec de tireuse », disposée en aval de la pompe, dont l'ouverture permet l'écoulement du vin dans le conteneur à remplir, et dont la fermeture met fin au remplissage de ce conteneur.

Pour éviter le transfert jusqu'au conteneur à remplir, de particules solides contenues dans le vin transporté par le circuit de transport, ce circuit peut être pourvu d'un filtre généralement disposé en aval de la pompe et en amont de l'organe de sectionnement.

L'accumulation des particules solides dans le filtre provoque progressivement le colmatage du filtre.

Notamment lorsque le circuit de transport comporte une pompe, ce colmatage provoque généralement une augmentation de la pression dans le circuit, en amont du filtre, pendant le fonctionnement de la pompe, ainsi qu'une diminution du débit de vin traversant le filtre, et par conséquent une diminution du débit de remplissage du conteneur.

Pour remplir chaque conteneur d'une quantité - ou dose - de vin prédéterminée, la durée nécessaire au remplissage augmente alors au fur et à mesure du colmatage du filtre.

Bien que ce colmatage puisse être détecté, il peut difficilement être quantifié précisément, de sorte qu'il ne peut être compensé avec précision.

Notamment lorsque la pompe est une pompe volumétrique, la surpression dans la portion du circuit de transport reliant la pompe au filtre, augmente au fur et à mesure du colmatage du filtre.

Chaque période de fonctionnement - ou cycle - d'un dispositif de conditionnement/remplissage peut être décomposé(e) en une première portion de cycle pendant laquelle l'organe de sectionnement est ouvert pour provoquer le remplissage d'un conteneur, et une seconde portion de cycle pendant laquelle l'organe de sectionnement est fermé.

Pendant cette seconde portion de cycle, le conteneur (plein) venant d'être rempli peut être évacué du poste de remplissage par un actionneur du dispositif de conditionnement, tandis qu'un conteneur vide (à remplir) peut être mis en place au poste de remplissage, par un autre actionneur par exemple.

Pendant cette seconde portion de cycle, l'organe de sectionnement étant fermé, la pression dans le circuit de transport de vin s'égalise de part et d'autre du filtre, de sorte que la pression en aval du filtre augmente en raison de ladite surpression produite en amont du filtre en raison du colmatage.

Il peut en résulter qu'à l'ouverture ultérieure de l'organe de sectionnement, la pression régnant dans le circuit en amont de cet organe provoque une brusque expulsion de vin au travers de cet organe.

Ceci peut provoquer une perte de vin et un remplissage inférieur à la dose souhaitée, et/ou la projection de vin sur le buvant du verre - ou conteneur - à remplir, ce qui peut ensuite altérer ou empêcher le thermoscellage d'un opercule sur ce buvant.

La surpression apparaissant dans le circuit de transport en amont de l'organe de sectionnement peut augmenter lorsqu'un aléa conduit à un défaut de mise en place d'un conteneur vide à un poste de remplissage simultané de plusieurs conteneurs, et que l'absence du conteneur vide est détectée par un capteur prévu à cet effet.

Dans ce cas, un signal délivré par ce capteur peut être utilisé pour ne pas commander l'ouverture de l'organe de sectionnement correspondant au conteneur absent, pendant la première portion d'un cycle, ce qui peut conduire à l'augmentation de ladite surpression et de ses conséquences, à un remplissage (des conteneurs présents au poste de remplissage) supérieur à la dose souhaitée pendant le cycle considéré, et/ou à un remplissage inférieur à la dose souhaitée pendant le cycle suivant le cycle considéré.

Par ailleurs, l'échappement brusque du vin dans le conteneur à remplir peut provoquer l'apparition de mousse et peut contrarier un remplissage correct de l'espace de tête par le gaz d'inertage.

La demande WO2012/154292A1 décrit un dispositif selon le préambule de la revendication 1.

### EXPOSÉ DE L'INVENTION

Un objectif de l'invention est de proposer un procédé et un dispositif de conditionnement d'une boisson dans des conteneurs de faible capacité, qui permettent un remplissage précis et rapide des conteneurs et évitent la mise en contact de la boisson avec l'air ambiant.

Un objectif de l'invention est de proposer un procédé et un dispositif de conditionnement d'une boisson dans des verres fermés par des opercules, qui soient améliorés et/ou qui remédient, en partie au moins, aux lacunes ou inconvénients des procédés et dispositifs connus de conditionnement de boisson. L'invention est décrite par les revendications ci-jointes. Selon un aspect, il est proposé un procédé de conditionnement d'une boisson stockée dans un réservoir et transportée par un circuit de transport comportant un filtre et un organe de sectionnement prévu en aval du filtre, dans lequel :
- on équipe le circuit de transport d'un réservoir tampon (pour la boisson), qui est raccordé entre le filtre et l'organe de sectionnement, est disposé au dessus de l'organe de sectionnement et est fermé pour isoler son contenu de l'atmosphère ambiante ;
- on établit, dans le réservoir tampon, une couverture gazeuse - un ciel gazeux - inerte que l'on maintient à une pression sensiblement égale à la pression ambiante (atmosphérique), et on maintient la hauteur de la colonne de boisson, en particulier la hauteur de la surface libre de boisson contenue dans le réservoir tampon, à une valeur sensiblement constante, de sorte que la boisson présente dans le réservoir tampon n'est pas mise en contact avec l'air ambiant et peut s'écouler librement (par gravité) depuis le réservoir tampon jusqu'à l'organe de sectionnement et au travers de cet organe - lorsque cet organe est ouvert -, selon un débit d'écoulement (gravitaire) qui n'est pas influencé par le colmatage du filtre et peut être sensiblement constant pendant la durée d'ouverture de l'organe de sectionnement.

On peut ainsi maitriser facilement le volume de boisson délivré dans chaque conteneur en ouvrant l'organe de sectionnement pendant une durée d'ouverture déterminée.

On peut en outre contrôler le volume de boisson délivré dans un conteneur en mesurant de débit de remplissage du conteneur, notamment à l'aide d'un débitmètre.

Pour assurer un débit d'écoulement de boisson, depuis le réservoir tampon jusqu'à un orifice de sortie par lequel la boisson s'écoule dans le conteneur à remplir, qui est sensiblement constant, c.à.d. qui reste proche d'une valeur nominale de débit, on régule la pression (hydro-)statique de la boisson à l'orifice de sortie en maintenant la hauteur de la colonne de boisson à une valeur sensiblement constante, c.à.d. proche d'une valeur nominale de hauteur, la hauteur de la colonne de boisson étant la différence de cote (altimétrique) entre la surface libre de la boisson dans le réservoir tampon et l'orifice de sortie.

La valeur nominale de la hauteur de la colonne de boisson peut par exemple être située dans une plage allant de 10 ou 20 centimètres (soit 0.1 ou 0.2 mètre) environ jusqu'à un ou deux mètre environ.

La hauteur séparant le second réservoir de l'orifice de sortie de boisson, est choisie en conséquence.

Selon un mode de réalisation, la variation de la hauteur de la colonne de boisson par rapport à la valeur nominale de cette hauteur, peut par exemple être située dans une plage allant de 2% à 5% environ jusqu'à 10% ou 20% environ, ce qui permet de limiter la variation du débit d'écoulement de la boisson à une valeur située dans une plage allant de 1% environ à 10% environ.

A cet effet, on peut contrôler le niveau de la surface libre de la boisson dans le réservoir tampon, en introduisant la boisson dans ce réservoir lorsque ce niveau atteint une valeur minimale prédéterminée, et en arrêtant l'introduction de boisson dans ce réservoir lorsque ce niveau atteint une valeur maximale prédéterminée.

Le volume de la portion du réservoir tampon comprise entre ces valeurs maximale et minimale de niveau de boisson, est de préférence au moins égal à la contenance cumulée des conteneurs à remplir en au moins deux cycles, ce qui permet notamment d'abaisser la fréquence de démarrage de la pompe alimentant le réservoir tampon.

On peut introduire dans le réservoir tampon un gaz peu soluble dans la boisson, tel que l'azote, pour former le ciel gazeux.

Pour maintenir la pression du ciel gazeux à une valeur proche de la pression ambiante, on ferme de préférence le réservoir tampon par une membrane étanche à l'air et se déformant, sensiblement élastiquement, sous l'effet d'une faible différence de pression entre ses faces interne et externe.

Par exemple, la différence de pression entre la pression régnant dans le ciel gazeux et la pression ambiante peut être ainsi maintenue inférieure ou égale, en valeur absolue, à une valeur pouvant être située dans une plage allant de 50 ou 100 Pascal (Pa) environ, jusqu'à 1000, 2000 ou 5000 Pa environ.

Selon un autre aspect, il est proposé un dispositif de conditionnement de boisson dans des verres - ou autres conteneurs de faible contenance -, sous atmosphère protectrice (inerte), qui comporte un premier réservoir à boisson (ou cuve de tirage), une vanne (bec de tireuse), et un circuit de transport de boisson reliant la vanne au premier réservoir et comportant un filtre et un orifice de sortie par lequel la boisson peut s'écouler dans un conteneur à remplir ; le dispositif comporte en outre un second réservoir à boisson (ou cuve tampon) disposé/inséré dans le circuit entre le filtre et la vanne, qui est fermé et est placé au dessus de la vanne, ainsi que des moyens d'introduction d'un gaz inerte dans le second réservoir ; une paroi au moins du second réservoir est étanche à l'air - et au gaz inerte - et suffisamment déformable pour maintenir un ciel gazeux inerte introduit dans ce réservoir, à une pression voisine de la pression ambiante, de façon à permettre un écoulement gravitaire de la boisson, depuis le second réservoir jusqu'à l'orifice de sortie, selon un débit d'écoulement (sensiblement constant) qui n'est pas influencé par un colmatage du filtre.

Grâce à la paroi déformable élastiquement et étanche, la contenance du second réservoir, c.à.d. le volume délimité par les parois du réservoir, peut varier dans de grandes proportions alors que la pression régnant dans le ciel gazeux de ce réservoir reste sensiblement égale à la pression ambiante.

Le dispositif de conditionnement de boisson comporte généralement des moyens de maintien de la hauteur de la colonne de boisson, à une valeur sensiblement constante.

Ceci permet de maintenir une pression (hydro)statique de sortie du circuit de transport de boisson qui est sensiblement constante, et permet par conséquent d'assurer un débit de remplissage d'un conteneur sensiblement constant pendant toute la durée d'ouverture de la vanne de tirage/remplissage - pour un cycle de remplissage déterminé -.

Cette paroi déformable étanche peut être agencée pour former une partie au moins de la paroi supérieure du second réservoir.

Cette paroi déformable étanche peut être une membrane réalisée dans un matériau élastique ou dans un élastomère, adapté pour être mis au contact de la boisson, par exemple du silicone.

Selon un mode de réalisation, le second réservoir peut être sensiblement entièrement déformable, par exemple en forme de poche.

Les moyens de maintien de la hauteur de la colonne de boisson à une valeur sensiblement constante peuvent comporter au moins un capteur de niveau sensible à la présence de boisson dans le second réservoir, à une première hauteur ainsi qu'à une seconde hauteur peu supérieure à la première hauteur, et peuvent comporter des moyens de maintien de la surface libre de boisson contenue dans le second réservoir, à une hauteur comprise entre les première et seconde hauteur.

En particulier, le second réservoir peut comporter un premier capteur (de niveau) sensible à la présence de boisson dans ce réservoir, à une première hauteur, ainsi qu'un second capteur (de niveau) sensible à la présence de boisson dans ce réservoir, à une seconde hauteur légèrement supérieure à la première hauteur, et des moyens de maintien de la surface libre de boisson contenue dans le second réservoir, à une hauteur comprise entre les première et seconde hauteurs.

Ces moyens de maintien de la hauteur de la surface libre de boisson peuvent comporter une unité de commande, en particulier un automate ou autre unité électronique de commande à microprocesseur, qui est reliée au(x) capteur(s) de niveau ainsi qu'à des moyens d'alimentation en boisson du second réservoir, et qui est agencée, en particulier programmée, pour commander l'introduction de boisson (délivrée par le circuit de transport) dans le second réservoir lorsque le niveau de la surface libre de boisson atteint la première hauteur, et est agencée pour stopper l'introduction de boisson dans le second réservoir lorsque le niveau de la surface libre de boisson atteint la seconde hauteur.

Les moyens d'alimentation en boisson du second réservoir peuvent comporter une pompe disposée/insérée dans le circuit de transport de boisson entre le premier réservoir et le filtre.

Cette pompe peut être une pompe à membrane, une pompe à lobes, ou une pompe à rotor hélicoïdal - également dénommée pompe à vis ou pompe à queue de cochon -.

Le second réservoir peut être équipé de moyens de dégazage - tels qu'une soupape - assurant que la pression dans le second réservoir ne s'élève pas au dessus d'une valeur déterminée, notamment sous l'effet d'une vaporisation du dioxyde de carbone dissous dans la boisson contenue dans le second réservoir.

Le dispositif de conditionnement peut comporter au moins deux vannes (de tirage/remplissage) qui peuvent être respectivement reliées au second réservoir par au moins deux conduits de transport (gravitaire) de boisson.

Chacun de ces conduits de transport peut être équipé d'un débitmètre servant à contrôler chaque dose de boisson distribuée dans chaque conteneur.

L'invention permet notamment de remplir avec précision - qui peut être par exemple de l'ordre de 1%, 2%, ou 3% environ -, à cadence élevée, et en évitant de mettre la boisson au contact de l'air, des verres de faible contenance.

L'invention s'applique en particulier au remplissage de verres en matière plastique tels que décrits dans la demande WO2010/106239 dont le contenu est intégré à la présente par référence.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est une vue schématique d'un dispositif de conditionnement de vin dans des verres.
La figure 2 est une vue schématique d'un autre dispositif de conditionnement de vin dans des verres.

### DESCRIPTION DETAILLEE DE L'INVENTION

Sauf indication explicite ou implicite contraire, des éléments ou organes - structurellement ou fonctionnellement - identiques ou similaires sont désignés par des repères identiques sur les différentes figures.

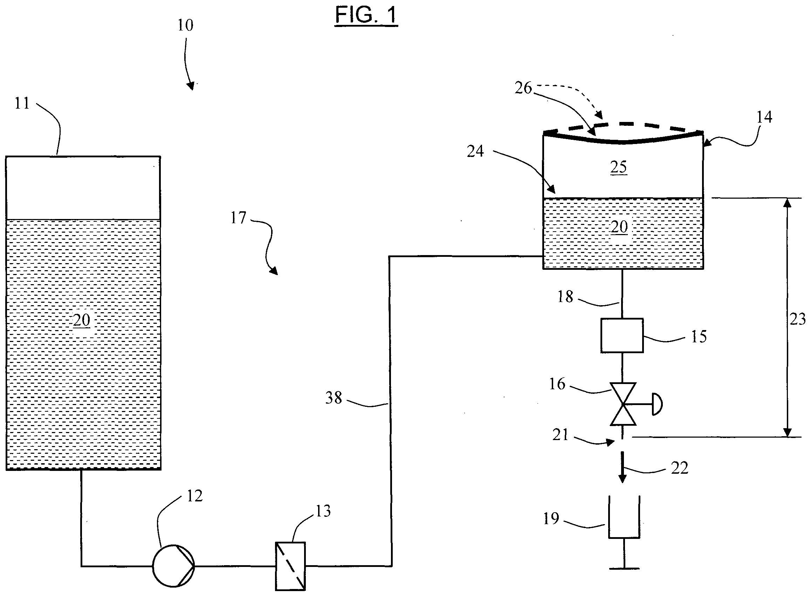

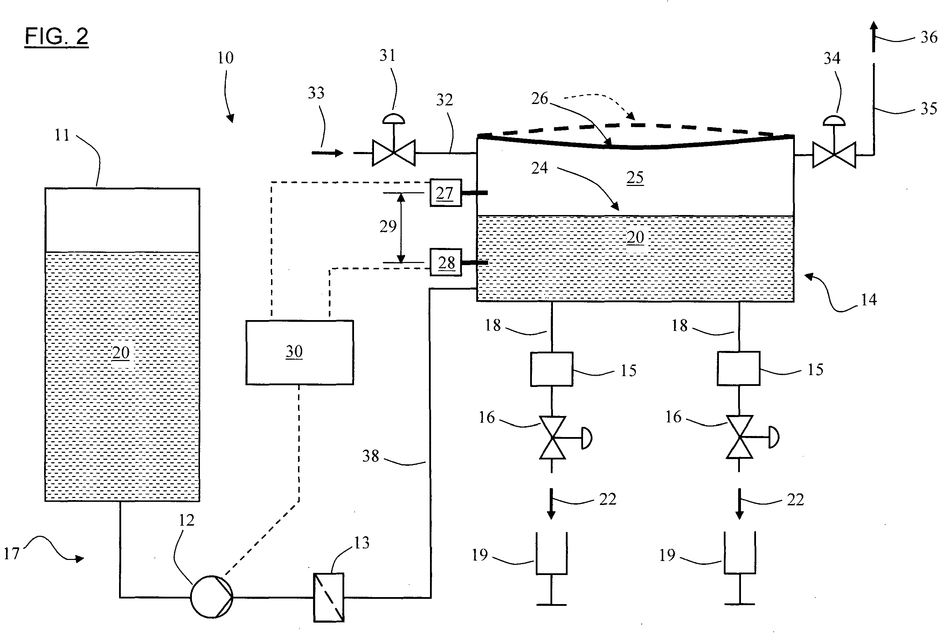

Par référence aux figures 1 et 2, le dispositif 10 sert au conditionnement de vin 20 dans des verres 19 dont la contenance peut être de l'ordre de 20 centilitres par exemple.

Par référence à la figure 1 notamment, le dispositif 10 comporte un premier réservoir 11 de stockage de vin, tel qu'une cuve de soutirage, et une vanne 16 commandable à distance pour permettre - et inversement interdire - l'écoulement de vin dans un verre 19 à remplir.

Un circuit de transport 17 relie la vanne (ou les vannes) 16 au premier réservoir 11.

Ce circuit comporte, disposés successivement à partir du réservoir 11 et jusqu'à la (les) vanne(s) 16 : une pompe 12, un filtre 13, et un second réservoir 14 disposé au dessus de la (des) vanne(s), qui sont raccordés deux à deux par des conduits 38 du circuit 17.

Le dispositif 10 comporte en outre une vanne 31 et un conduit 32 permettant l'introduction 33 d'un gaz inerte tel que de l'azote, dans la partie supérieure du second réservoir 14, pour former un ciel gazeux inerte 25 dans ce réservoir.

Comme illustré figures 1 et 2, une paroi supérieure 26 du second réservoir est constituée par une membrane 26 étanche à l'air et au gaz inerte introduit dans le réservoir 14 ; les autres parois du réservoir 14 sont également étanches à l'air et au gaz inerte.

Cette membrane 26 est susceptible de passer d'une configuration rétractée illustrée en trait plein à une configuration expansée illustrée en trait interrompu, en fonction de la différence entre les pressions respectivement appliquées sur sa face interne (face inférieure) et sur sa face externe (face supérieure), c'est-à-dire entre la pression ambiante et la pression du ciel gazeux contenu dans le réservoir 14.

La déformation de cette membrane permet ainsi de maintenir le ciel gazeux inerte 25 du réservoir 14 à une pression voisine de la pression ambiante.

Dans le mode de réalisation illustré figure 2, le réservoir 14 est en outre équipé d'une vanne ou soupape 34 et d'un conduit 35 permettant une évacuation 36 du gaz contenu dans le réservoir 14, par exemple lorsque la pression dans le réservoir 14 s'élève au dessus d'une valeur déterminée en raison d'un dégazage du CO₂ dissous dans le vin contenu dans ce réservoir.

Pour pouvoir maintenir le niveau de vin dans le réservoir 14, c'est-à-dire la hauteur 23 de la surface libre 24 mesurée par rapport à l'orifice 21 d'expulsion 22 du vin dans le verre, dans une plage de valeurs déterminée, le réservoir 14 comporte deux capteurs 27, 28 de niveau qui sont sensibles à la présence de vin dans le réservoir, et sont séparés par une hauteur 29 qui est relativement faible, par exemple de l'ordre d'un dixième de la hauteur du réservoir 14.

Les signaux - ou données - délivré(e)s par les capteurs de niveau 27, 28 sont transmis(es) à une unité de commande 30 reliée à cet effet aux capteurs 27, 28 par des moyens de liaison illustrés par des traits pointillés figure 2.

L'unité de commande 30 est également reliée à la pompe 12 servant à alimenter le second réservoir par du vin contenu dans le premier réservoir 11, pour commander le démarrage et l'arrêt de la pompe 12.

L'unité de commande 30 est programmée pour commander l'introduction de vin dans le réservoir 14 lorsque le niveau de la surface libre 24 de vin atteint le niveau (minimal) détecté par le capteur 28 de niveau disposé en position inférieure, et est programmée pour stopper l'introduction de vin dans le réservoir 14 lorsque le niveau de la surface libre 24 atteint le niveau maximal détecté par le capteur 27 de niveau disposé en position supérieure.

Ceci permet de contrôler les variations de la hauteur 23 de la colonne de vin, c'est-à-dire de la pression hydrostatique du vin à l'orifice de sortie 21, et permet par conséquent de contrôler les variations du débit d'écoulement du vin s'échappant de l'orifice 21, cet écoulement s'opérant par gravité.

Le dispositif 10 illustré figure 2 comporte deux vannes 16 de tirage/remplissage qui sont respectivement reliées au réservoir 14 par deux conduits 18 de transport gravitaire de vin.

Chaque conduit 18 est équipé d'un débitmètre 15 permettant de mesurer précisément chaque dose de vin distribuée dans chaque conteneur.

Le volume du réservoir tampon 14 compris entre les hauteurs respectives des capteurs 27, 28 de niveau du vin, peut être au moins égal à la contenance cumulée des conteneurs 19 à remplir en deux ou trois cycles de fonctionnement du dispositif de remplissage.

La durée de chaque cycle de fonctionnement du dispositif de remplissage peut être de l'ordre d'une dizaine de secondes, par exemple, dont la moitié environ peut correspondre au temps d'écoulement nécessaire au remplissage d'un (ou plusieurs) conteneur(s) 19.

Notamment lorsque le poste de remplissage procède au remplissage simultané de deux verres 19, comme illustré figure 2, un signal d'ouverture peut être simultanément adressé aux vannes 16 par l'unité 30, par des moyens de liaison non représentés, et la fermeture de ces vannes peut être commandée en fonction d'un signal qui est fonction du volume écoulé dans chaque conduit 18, tel que mesuré par chaque débitmètre 15 - et intégré dans le temps -.

## Revendications

1. - Dispositif (10) de conditionnement de boisson (20) dans des conteneurs (19), qui comporte :
- un premier réservoir (11),
- un circuit de transport (17) reliant le premier réservoir à un orifice de sortie (21) par lequel la boisson peut s'écouler dans un conteneur (19) à remplir, le circuit (17) comportant un filtre (13) et une vanne de tirage (16),
- un second réservoir (14) disposé dans le circuit (17) entre le filtre et la vanne et placé au dessus de la vanne ;
- un conduit (18) de transport de boisson qui relie le second réservoir (14) à la vanne (16) ; et
- un conduit (32) d'introduction (33) d'un gaz inerte dans le second réservoir ;
le second réservoir étant fermé et étanche à l'air et au gaz inerte,
le dispositif (10) étant **caractérisé en ce qu'**il comporte en outre des moyens de maintien de la hauteur (23) de la colonne de boisson, à une valeur sensiblement constante, la hauteur de la colonne de boisson étant la différence de cote entre la surface libre de la boisson dans le second réservoir (14) et l'orifice de sortie (21) ; et
**en ce qu'**une paroi (26) au moins du second réservoir est suffisamment déformable sous l'effet d'une différence de pression entre ses faces interne et externe, pour maintenir un ciel gazeux inerte (25) introduit dans ce réservoir par le conduit (32), à une pression voisine de la pression ambiante, de sorte que la boisson présente dans le second réservoir (14) n'est pas mise en contact avec l'air ambiant et peut s'écouler librement, par gravité, dans le conduit (18) de transport, depuis le second réservoir (14) jusqu'à l'orifice de sortie (21), selon un débit d'écoulement gravitaire sensiblement constant pendant la durée d'ouverture de la vanne de tirage (16), et qui n'est pas influencé par un colmatage du filtre.

2. - Dispositif selon la revendication 1 dans lequel les moyens de maintien de la hauteur (23) de la colonne de boisson à une valeur sensiblement constante comportent au moins un premier capteur (27, 28) de niveau sensible à la présence de boisson dans le second réservoir, à une première hauteur ainsi qu'à une seconde hauteur peu supérieure à la première hauteur, et comportent des moyens de maintien de la surface libre (24) de boisson contenue dans le second réservoir, à une hauteur comprise entre les première et seconde hauteur.

3. - Dispositif selon la revendication 2 dans lequel les moyens de maintien de la surface libre (24) de boisson à une hauteur sensiblement constante comportent une unité de commande (30) reliée au(x) capteur(s) de niveau (27, 28) ainsi qu'à des moyens (12) d'alimentation en boisson du second réservoir, l'unité de commande étant agencée pour commander l'introduction de boisson dans le second réservoir lorsque le niveau de la surface libre de boisson atteint la première hauteur, et étant agencée pour stopper l'introduction de boisson dans le second réservoir lorsque le niveau de la surface libre de boisson atteint la seconde hauteur.

4. - Dispositif selon la revendication 3 dans lequel les moyens d'alimentation en boisson du second réservoir comportent une pompe (12) disposée dans le circuit de transport de boisson entre le premier réservoir et le filtre.

5. - Dispositif selon l'une quelconque des revendications 1 à 4 dans lequel le second réservoir est équipé de moyens (34, 35) de dégazage (36) assurant que la pression dans le second réservoir ne s'élève pas au dessus d'une valeur déterminée.

6. - Dispositif selon l'une quelconque des revendications 1 à 5 qui comporte au moins deux vannes (16) de tirage pour un remplissage simultané d'au moins deux conteneurs (19), qui équipent respectivement au moins deux conduits (18) de transport gravitaire de boisson qui relient chacun le second réservoir à une des vannes (16), chaque conduit de transport (18) étant équipé d'un débitmètre (15) permettant de contrôler chaque dose de boisson distribuée dans chaque conteneur.

7. - Dispositif selon l'une quelconque des revendications 1 à 6 dans lequel la paroi (26) déformable étanche est agencée pour former une partie au moins de la paroi supérieure du second réservoir.

8. - Dispositif selon l'une quelconque des revendications 1 à 7 dans lequel la paroi (26) déformable étanche est déformable sensiblement élastiquement, la paroi (26) étant de préférence essentiellement constituée par une membrane réalisée dans un matériau élastique ou dans un élastomère, qui est adapté pour être mis au contact de la boisson, par exemple du silicone.

9. - Procédé de conditionnement sous atmosphère protectrice d'une boisson (20) stocké(e) dans un réservoir (11) et transporté(e) par un circuit de transport (17) comportant un filtre (13), un organe de sectionnement (16) prévu en aval du filtre, et un orifice de sortie (21) par lequel la boisson peut s'écouler dans un conteneur (19) à remplir tel qu'un verre à boire, dans lequel :
- on équipe le circuit de transport d'un réservoir tampon (14), qui est fermé, est raccordé entre le filtre et l'organe de sectionnement, et est disposé au dessus de l'organe de sectionnement ;
- on maintient la hauteur (23) de la colonne de boisson, à une valeur sensiblement constante, la hauteur de la colonne de boisson étant la différence de cote entre la surface libre de la boisson dans le réservoir tampon (14) et l'orifice de sortie (21) ; et
- on établit, dans le réservoir tampon, un ciel gazeux inerte (25) que l'on maintient à une pression sensiblement égale à la pression ambiante, de sorte que la boisson présente dans le réservoir tampon n'est pas mise en contact avec l'air ambiant et peut s'écouler librement, par gravité, dans un conduit (18) de remplissage reliant le réservoir tampon à l'organe de sectionnement, et au travers de cet organe lorsque cet organe est ouvert, depuis le réservoir tampon (14) jusqu'à l'orifice de sortie (21), selon un débit d'écoulement gravitaire sensiblement constant pendant la durée d'ouverture de l'organe de sectionnement (16), et qui n'est pas influencé par un colmatage du filtre,
et dans lequel, pour maintenir la pression du ciel gazeux à une valeur proche de la pression ambiante, on ferme le réservoir tampon par une membrane (26) étanche à l'air et au gaz inerte, et se déformant sensiblement élastiquement sous l'effet d'une différence de pression entre ses faces interne et externe.

10. - Procédé selon la revendication 9 dans lequel on régule la pression statique de la boisson à l'orifice de sortie, en maintenant la hauteur (23) de la colonne de boisson à une valeur proche d'une valeur nominale de hauteur, et dans lequel la variation de la hauteur de la colonne de boisson par rapport à la valeur nominale de cette hauteur est par exemple située dans une plage allant de 2% environ jusqu'à 20 % environ.

11. - Procédé selon l'une quelconque des revendications 9 ou 10 dans lequel la valeur nominale de la hauteur de la colonne de boisson est située dans une plage allant de 10 ou 20 centimètres environ jusqu'à un ou deux mètre environ.

12. - Procédé selon l'une quelconque des revendications 9 à 11 dans lequel on contrôle le niveau de la surface libre (24) dans le réservoir tampon, en introduisant de la boisson dans ce réservoir lorsque ce niveau atteint une valeur minimale prédéterminée, et en arrêtant l'introduction de boisson dans ce réservoir lorsque ce niveau atteint une valeur maximale prédéterminée, et dans lequel le volume de la portion du réservoir tampon comprise entre les valeurs maximale et minimale de niveau de boisson, est de préférence au moins égal à la contenance cumulée des conteneurs (19) à remplir en au moins deux cycles de remplissage.

13. - Procédé selon l'une quelconque des revendications 9 à 12 dans lequel on contrôle le volume de boisson délivré dans un conteneur en mesurant de débit de remplissage du conteneur à l'aide d'un débitmètre.

14. - Procédé selon l'une quelconque des revendications 9 à 13 dans lequel, pour remplir simultanément deux conteneurs (19), on délivre simultanément un signal d'ouverture à deux vannes (16) de remplissage qui équipent respectivement deux conduits (18) de transport gravitaire de boisson qui relient chacun le réservoir tampon à une des vannes (16), et on commande la fermeture de ces vannes en fonction d'un signal qui est fonction du volume écoulé dans chaque conduit (18), tel que mesuré par deux débitmètres (15) équipant les conduits (18) - et intégré dans le temps -.

15. - Procédé selon l'une quelconque des revendications 9 à 14 dans lequel la boisson est en partie au moins composée de vin.

## Patentansprüche

1. Vorrichtung (10) zum Abfüllen von Getränk (20) in Behälter (19), umfassend:
- einen ersten Vorratsbehälter (11),
- einen Förderkreislauf (17), der den ersten Vorratsbehälter mit einer Austrittsöffnung (21) verbindet, durch die das Getränk in einen zu befüllenden Behälter (19) fließen kann, wobei der Kreislauf (17) einen Filter (13) aufweist und ein Abziehventil (16),
- einen zweiten Vorratsbehälter (14), der im Kreislauf (17) zwischen dem Filter und dem Ventil angeordnet ist und sich oberhalb des Ventils befindet,
- eine Getränkförderleitung (18), die den zweiten Vorratsbellälter (14) mit dem Ventil (16) verbindet, und
- eine Leitung (32) zur Einleitung (33) eines inerten Gases in den zweiten Vorratsbehälter,
wobei der zweite Vorratsbehälter geschlossen und für Luft und das inerte Gas dicht ist,
wobei die Vorrichtung (10) **dadurch gekennzeichnet ist, dass** sie außerdem Mittel zum Halten der Höhe (23) der Getränkesäule auf einem im Wesentlichen konstanten Wert aufweist, wobei die Höhe der Getränkesäule die Höhendifferenz zwischen der freien Oberfläche des Getränks im zweiten Vorratsbehälter (14) und der Austrittsöffnung (21) ist, und
dadurch, dass mindestens eine Wand (26) des zweiten Vorratsbehälters unter der Wirkung einer Druckdifferenz zwischen ihrer Innen- und ihrer Außenseite ausreichend verformbar ist, um eine Bedeckung mit inertem Gas (25), das durch die Leitung (32) in diesen Behälter eingeleitet wurde, auf einem Druck nahe dem Umgebungsdruck zu halten, derart dass das im zweiten Vorratsbehälter (14) vorhandene Getränk nicht mit der Umgebungsluft in Berührung kommt und durch Schwere in der Förderleitung (18) vom zweiten Vorratsbehälter (14) bis zur Austrittsöffnung (21) mit einer über die Dauer der Öffnung des Abziehventils (16) im Wesentlichen konstanten Schweredurchflussleistung, die von einer Verstopfung des Filters nicht beeinflusst wird, frei fließen kann.

2. Vorrichtung nach Patentanspruch 1, in der die Mittel zum Halten der Höhe (23) der Getränkesäule auf einem im Wesentlichen konstanten Wert mindestens einen ersten Niveausensor (27, 28) aufweisen, der die Anwesenheit von Getränk im zweiten Vorratsbehälter auf einer ersten Höhe, sowie auf einer zweiten, geringfügig größeren Höhe als der ersten, feststellt, und Mittel zum Halten der freien Oberfläche (24) des Getränks im zweiten Vorratsbehälter auf einer Höhe zwischen der ersten und der zweiten Höhe aufweisen.

3. Vorrichtung nach Patentanspruch 2, in der die Mittel zum Halten der freien Oberfläche (24) des Getränks auf einer im Wesentlichen konstanten Höhe eine Steuereinheit (30) aufweisen, die mit dem/n Niveausensor/en (27, 28), sowie mit Mitteln (12) zur Zufuhr von Getränk zum zweiten Vorratsbehälter verbunden ist, wobei die Steuereinheit dafür eingerichtet ist, die Einleitung von Getränk in den zweiten Vorratsbehälter zu veranlassen, wenn das Niveau der freien Getränkeoberfläche die erste Höhe erreicht, und dafür eingerichtet ist, die Einleitung von Getränk in den zweiten Vorratsbehälter zu unterbrechen, wenn das Niveau der freien Getränkeoberfläche die zweite Höhe erreicht.

4. Vorrichtung nach Patentanspruch 3, in der die Mittel zur Zufuhr von Getränk zum zweiten Vorratsbehälter eine Pumpe (12) aufweisen, die im Getränkeförderkreislauf zwischen dem ersten Vorratsbehälter und dem Filter angeordnet ist.

5. Vorrichtung nach irgendeinem der Patentansprüche 1 bis 4, in der der zweite Vorratsbehälter mit Mitteln (34, 35) zur Entgasung (36) ausgestattet ist, die sicherstellen, dass der Druck im zweiten Vorratsbehälter nicht einen festgelegten Betrag übersteigt.

6. Vorrichtung nach irgendeinem der Patentansprüche 1 bis 5, die mindestens zwei Abziehventile (16) zum gleichzeitigen Befüllen mindestens zweier Behälter (19) aufweist, mit denen jeweils mindestens zwei Schwereförderleitungen (18) für Getränk ausgestattet sind, die jeweils den zweiten Vorratsbehälter mit einem der Ventile (16) verbinden, wobei jede Förderleitung (18) mit einem Durchflussmesser (15) ausgestattet ist, der erlaubt, jede Getränkemenge zu kontrollieren, die jedem Behälter zugeführt wird.

7. Vorrichtung nach irgendeinem der Patentansprüche 1 bis 6, in der die dichte, verformbare Wand (26) derart angeordnet ist, dass sie mindestens einen Teil der oberen Wand des zweiten Vorratsbehälters bildet.

8. Vorrichtung nach irgendeinem der Patentansprüche 1 bis 7, in der die dichte, verformbare Wand (26) im Wesentlichen elastisch verformbar ist, wobei die Wand (26) vorzugsweise im Wesentlichen aus einer Membran besteht, die aus einem elastischen Werkstoff oder einem Elastomer gefertigt wurde, der dafür geeignet ist, mit dem Getränk in Berührung zu kommen, wie beispielsweise Silikon.

9. Verfahren zum Abfüllen eines Getränkes (20) unter Schutzatmosphäre, das in einem Vorratsbehälter (11) bevorratet und in einem Förderkreislauf (17) gefördert wird, der einen Filter (13) umfasst, ein Trennorgan (16), das stromabwärts des Filters vorgesehen ist, und eine Austrittsöffnung (21), durch die das Getränk in einen zu befüllenden Behälter (19), wie etwa ein Trinkglas, ausfließen kann, in dem:
- der Förderkreislauf mit einem Pufferbehälter (14) versehen wird, der geschlossen ist, der zwischen dem Filter und dem Trennorgan angeschlossen ist und der über dem Trennorgan angeordnet ist,
- die Höhe (23) der Getränkesäule auf einem im Wesentlichen konstanten Betrag gehalten wird, wobei die Höhe der Getränkesäule die Niveaudifferenz zwischen der freien Oberfläche des Getränks im Pufferbehälter (14) und der Austrittsöffnung (21) ist, und
- im Pufferbehälter eine Bedeckung mit inertem Gas (25) erzeugt wird, das auf einem im wesentlichen dem Umgebungsdruck gleichen Druck gehalten wird, derart, dass das im Pufferbehälter vorhandene Getränk nicht mit der Umgebungsluft in Berührung gebracht wird und durch Schwere in einer Befüllleitung (18), die den Pufferbehälter mit dem Trennorgan verbindet, und durch dieses Organ, wenn dieses Organ offen ist, vom Pufferbehälter (14) bis zur Austrittsöffnung (21) mit einer über die Dauer der Öffnung des Trennorgans (16) im Wesentlichen konstanten Schweredurchflussleistung frei fließen kann, die von einer Verstopfung des Filters nicht beeinflusst wird,
und in dem der Pufferbehälter zum Halten des Druckes der Gasbedeckung auf einem Wert nahe dem Umgebungsdruck durch eine Membran (26) verschlossen wird, die für Luft und das inerte Gas dicht ist, und die sich unter der Wirkung einer Druckdifferenz zwischen ihrer Außen- und ihrer Innenseite im Wesentlichen elastisch verformt.

10. Verfahren nach Patentanspruch 9, in dem der statische Druck des Getränks an der Austrittsöffnung reguliert wird, indem die Höhe (23) der Getränkesäule auf einem Wert nahe einem Nennwert der Höhe gehalten wird, und in dem die Änderung der Höhe der Getränkesäule gegenüber dem Nennwert dieser Höhe beispielsweise in einem Bereich liegt, der zwischen ungefähr 2% bis zu ungefähr 20% umfasst.

11. Verfahren nach irgendeinem der Patentansprüche 9 oder 10, in dem der Nennwert der Höhe der Getränkesäule in einem Bereich liegt, der von ungefähr 10 oder 20 Zentimetern bis zu ungefähr einem oder zwei Metern umfasst.

12. Verfahren nach irgendeinem der Patentansprüche 9 bis 11, in dem das Niveau der freien Oberfläche (24) im Pufferbehälter kontrolliert wird, indem Getränk in diesen Behälter eingefüllt wird, bis dieses Niveau einen festgelegten Minimalwert erreicht, und indem die Einleitung von Getränk in diesen Vorratsbehälter unterbrochen wird, wenn dieses Niveau einen festgelegten Maximalwert erreicht, und in dem das Volumen des Teils des Pufferbehälters zwischen dem Maximal- und dem Minimalwert des Getränkeniveaus vorzugsweise mindestens gleich dem Gesamtvolumeninhalt der in mindestens zwei Füllzyklen zu befüllenden Behälter (19) ist.

13. Verfahren nach irgendeinem der Patentansprüche 9 bis 12, in dem das Volumen des in einen Behälter gefüllten Getränks kontrolliert wird, indem die Füllmenge des Behälters mit Hilfe eine Durchflussmessers gemessen wird.

14. Verfahren nach irgendeinem der Patentansprüche 9 bis 13, in dem zum gleichzeitigen Befüllen zweier Behälter (19) gleichzeitig zwei Füllventilen (16), mit denen jeweils zwei Schwereförderleitungen (18) für Getränk ausgestattet sind, die jeweils den Pufferbehälter mit einem der Ventile (16) verbinden, ein Öffnungssignal gesandt wird, und indem das Schließen dieser Ventile in Abhängigkeit von einem Signal veranlasst wird, das vom in jeder Leitung (18) geflossenen Volumen abhängt, wie es von zwei Durchflussmessern (15), mit denen die Leitungen (18) versehen sind, gemessen - über die Zeit integriert - wird.

15. Verfahren nach irgendeinem der Patentansprüche 9 bis 14, in dem das Getränk mindestens teilweise aus Wein besteht.

## Claims

1. A device (10) for packaging beverage (20) in containers (19), the device comprising:
a first tank (11),
a transport circuit (17) connecting the first tank to an outlet orifice (21) through which the beverage can flow into a container (19) for filling, the circuit (17) including a filter (13) and a draw-off valve (16),
· a second tank (14) arranged in the circuit (17) between the filter and the valve, and placed above the valve;
· a beverage transport pipe (18) connecting the second tank (14) to the valve (16); and
· a pipe (32) for admitting (33) an inert gas into the second tank;
the second tank being closed and proof against air and the inert gas,
the device (10) being **characterized in that** it further comprises means for maintaining the height (23) of the column of beverage at a value that is substantially constant, the height of the column of beverage being the difference in altitude between the free surface of the beverage in the second tank (14) and the outlet orifice (21);
and **in that** at least a wall (26) of the second tank is sufficiently deformable under the effect of a pressure difference between its inside and outside faces to maintain an inert gas plenum (25) admitted into the tank by the pipe (32) at a pressure that is close to ambient pressure, such that the beverage present in the second tank (14) does not come into contact with ambient air and, throughout the duration for which the draw-off valve (16) is open, the beverage can flow freely, by gravity, in a transport pipe (18), from the second tank (14) to the outlet orifice (21), at a substantially constant gravity flow rate that is not influenced by clogging of the filter.

2. A device according to claim 1, wherein the means for maintaining the height (23) of the beverage column at a substantially constant value comprise at least a first level sensor (27, 28) sensitive to the presence of beverage in the second tank at a first height, and also at a second height that is a little higher than the first height, and including means for maintaining the free surface (24) of the beverage contained in the second tank aL a height lying between the first and second heights.

3. A device according to claim 2, wherein the means for maintaining the free surface (24) of beverage at a substantially constant height include a control unit (30) connected to the level sensor(s) (27, 28) and means (12) for feeding the second tank with beverage, the control being arranged to cause beverage to be admitted into the second tank when the level of the free surface of beverage reaches the first height, and being arranged to stop admitting beverage into the second tank when the level of the free surface of beverage reaches the second height.

4. A device according to claim 3, wherein the means for feeding the second tank with beverage comprise a pump (12) arranged in the circuit for transporting beverage between the first tank and the filter.

5. A device according to any one of claims 1 to 4, wherein the second tank is provided with means (34, 35) for degassing (36) so as to ensure that the pressure in the second tank does not rise above a determined value.

6. A device according to any one of claims 1 Lo 5 including at least two draw-off valves (16) for simultaneously filling at least two containers (19), respectively fitted to at least two beverage gravity transport pipes (18), each connecting the second tank to one of the valves (16), each transport pipe (18) being fitted with a flowmeter (15) for monitoring the quantity of beverage delivered to each container.

7. A device according to any one of claims 1 to 6, wherein the gas- and air-proof deformable wall (26) is arranged to form at least a portion of the top wall of the second tank.

8. A device according to any one of claims 1 to 7, wherein the gas- and air-proof deformable wall (26) is deformable substantially elastically, the wall (26) preferably being constituted essentially by a diaphragm made out of an elastic material or an elastomer that is suitable for coming into contact with the beverage, e.g. silicone.

9. A method of packaging under a protective atmosphere a beverage (20) stored in a tank (11) and transported by a transport circuit (17) including a filter (13), a cut-off member (16) provided downstream from the filter, and an outlet orifice (21) through which the beverage can flow into a container (19) for filling such as a drinking glass, wherein the method comprises the steps of:
· providing the transport circuit with a buffer tank (14) that is closed, which tank is connected between the filter and the cut-off member, and is arranged above the cut-off member;
· maintaining the height (23) of the column of beverage at a value that is substantially constant, the height of the column of beverage being the difference in altitude between the free surface of the beverage in the buffer tank (14) and the outlet orifice (21); and
· establishing, in the buffer tank, an inert gas plenum (25) that is maintained at a pressure substantially equal to ambient pressure, such that the beverage present in the buffer tank does not come into contact with ambient air and, throughout the duration for which the draw-off valve (16) is open, the beverage can flow freely, by gravity, in a filler pipe (18) connecting the buffer tank to the cut-off member, and through the cut-off member when it is open, from the second tank (14) to the outlet orifice (21), at a substantially constant gravity flow rate that is not influenced by clogging of the filter,
and wherein, in order to maintain the pressure of the gas plenum at a value close to ambient pressure, the buffer tank is closed by a diaphragm (26) that is proof against air and the inert gas, and that deforms substantially elastically under the effect of a pressure difference between its inside and outside faces.

10. A method according to claim 9, wherein the static pressure of the beverage at the outlet orifice is regulated by maintaining the height (23) of the column of beverage at a value close to a nominal height value, and wherein the variation in the height of the beverage column relative to the nominal value for said height lies for instance in a range extending from approximately 2% to approximately 20%.

11. A method according to claim 9 or claim 10, wherein the nominal height value of the column of beverage lies in a range extending from approximately 10 or 20 centimeters to approximately one or two meters.

12. A method according to any one of claims 9 to 11, wherein the level of the free surface (24) in the buffer tank is controlled by admitting beverage into the tank when the level reaches a predetermined minimum value, and by stopping admission of beverage into the tank when the level reaches a predetermined maximum value, and wherein the volume of the portion of the buffer tank lying between the maximum and minimum beverage level values is preferably not less than the combined content of containers (19) for filling during at least two filling cycles.

13. A method according to any one of claims 9 to 12, wherein the volume of beverage delivered into a container is monitored by measuring the rate at which the container is filled by using a flowmeter.

14. A method according to any one of claims 9 to 13, wherein in order to fill two containers (19) simultaneously, a signal is delivered simultaneously to two filler valves (16) fitted respectively to two beverage gravity transport pipes (18), each connecting the buffer tank to one of the valves (16), and the valves are caused to close as a function of a signal that is itself a function of the volume that has flowed along each pipe (18), as measured by the two flowmeters (15) fitted to the pipes (18), and as integrated over time.

15. A method according to any one of claims 9 to 14, wherein the beverage comprises wine, at least in part.
